# EUROPEAN PATENT APPLICATION

(11) **EP 2 848 588 A1**
(43) Date of publication of application: **18.03.2015**
(21) Application number: 13787508.4
(22) Date of filing: 10.05.2013
(51) Int. Cl.: C01G 19/00, C09D 11/00, C09K 3/00

(54) **ANTIMONY-DOPED TIN OXIDE, INFRARED-RAY-ABSORBABLE PIGMENT, INFRARED-RAY-ABSORBABLE INK, PRINTED MATTER, AND METHOD FOR PRODUCING ANTIMONY-DOPED TIN OXIDE**

(30) Priority: 11.05.2012 JP 2012109444
(71) Applicant: Kyodo Printing Co., Ltd., Tokyo 112-8501 (JP)
(72) Inventor: KOBAYASHI, Fumihito, Tokyo 112-8501 (JP); YOSHIZUMI, Wataru, Tokyo 112-8501 (JP); SHIMANE, Hiroaki, Tokyo 112-8501 (JP); KAWASAKI, Shota, Tokyo 112-8501 (JP); YAMADA, Atsushi, Yokkaichi-shi Mie 512-0934 (JP)
(74) Representative: Held, Stephan
(86) International application number: PCT/JP2013/063220
(87) International publication number: WO 2013/168812

(57) **Abstract**

An antimony-doped tin oxide which comprises tin oxide and antimony oxide and fulfills the following requirement (a) and/or (b): (a) the half-width value (Δ2θ) around 2θ= 27° as determined by an X-ray diffraction measurement is 0.35 or less; and/or (b) the content of antimony oxide is 0.5 to 10.0wt% relative to the weight of the antimony-doped tin oxide and the crystallinity, which is a value determined by dividing a peak value of a peak appearing around 2θ=27° as determined by an X-ray diffraction measurement by the half-width (Δ2θ), is 18092 or more.

## Description

### TECHNICAL FIELD

The present invention relates to an antimony-doped tin oxide capable of absorbing an infrared ray, an infrared-absorbing pigment, an infrared-absorbing ink, a printed matter, and a production method of an antimony-doped tin oxide.

### BACKGROUND ART

An antimony-doped tin oxide (ATO) is a tin oxide containing a small amount of antimony oxide, and the conventional general production method thereof is a coprecipitation firing method using a hydrolyzable tin compound and an antimony compound as raw materials. In this method, tin and antimony compounds are simultaneously hydrolyzed (for example, neutralized) in the same solution to coprecipitate respective hydrated oxides of tin and antimony. This coprecipitate is recovered, washed to remove the attached salt and then dehydrated by firing at 400°C or more to form an oxide, whereby ATO is obtained. In general, firing is carried out in a closed system so as to suppress the energy consumption volume.

Conventionally, the antimony-doped tin oxide (ATO) has been sometimes utilized as a transparent electrically-conductive material. In this case, the antimony oxide content needs to be about 10 wt% so as to obtain a transparent electrically-conductive material having a sufficient electrically-conducting property.

For example, in the electrically-conductive fine powder described in Patent Document 1, antimony oxide is added in an amount of 3 to 30 wt%, preferably from 5 to 20 wt%, based on tin oxide, and in the fine powder obtained by the production method described in Patent Document 2, 5 wt% or 10 wt% of antimony oxide is contained. However, these documents neither describe nor take into consideration an infrared absorption effect.

The antimony-doped tin oxide has an infrared absorption effect as well, and therefore can be used also as a security material (see, for example, Patent Document 3). In the technique of Patent Document 3, an infrared-absorbing ink having high transparency can be produced by adding the antimony-doped tin oxide to the ink.

For this reason, it is considered that according to the technique of Patent Document 3, an infrared-absorbing ink capable of forming a variety of colors can be produced by the combination with a pigment of various colors. In addition, the antimony-doped tin oxide is an inorganic pigment, and therefore is considered to be able to provide an infrared-absorbing ink excellent in the light resistance.

### RELATED ART

### PATENT DOCUMENT

Patent Document 1: Japanese Patent No. 2844012
Patent Document 2: Japanese Unexamined Patent Publication (Kokai) No. 56-156606
Patent Document 3: Japanese Unexamined Patent Publication (Kokai) No. 2010-6999

### SUMMARY OF THE INVENTION

### PROBLEMS TO BE SOLVED BY THE INVENTION

An antimony-doped tin oxide is produced by incorporating antimony oxide into tin oxide that is the main component. The principle on which the antimony-doped tin oxide exerts an infrared absorption effect is considered to reside in that antimony oxide forms a solid solution (intrudes) in the crystal lattice of tin oxide as the main component, and a crystal structure capable of absorbing an infrared ray is thereby formed.

Therefore, in order to sufficiently bring out the infrared absorption effect, antimony oxide needs to be incorporated to a certain extent into tin oxide that is the main component.

Here, the antimony oxide is encompassed by target substances of the pollutant release and transfer register (PRTR) system, toy safety standards, etc. In this respect, the amount of antimony oxide used is preferably smaller.

However, since the antimony oxide is believed to fulfill the role of absorbing an infrared ray by intruding into the crystal lattice of tin oxide, mere reduction in the amount used thereof leads to a problem that the infrared absorption effect decreases in response to the reduction.

Accordingly, an object of the present invention is to provide a technique capable of sufficiently bringing out an infrared absorption effect while reducing the amount used of antimony oxide.

### MEANS TO SOLVE THE PROBLEMS

In order to attain the above-described object, the present invention employs the following means to solve the problem.
[1] An antimony-doped tin oxide comprising tin oxide and antimony oxide, the antimony-doped tin oxide satisfying following requirements (a) and/or (b):
   (a) the half-width value (Δ2θ) of a peak around 2θ=27° as determined by X-ray diffraction measurement is 0.35 or less; and/or
   (b) the content of the antimony oxide is from 0.5 to 10.0 wt% based on the weight of the antimony-doped tin oxide, and the degree of crystallinity, which is a value obtained by dividing the peak value of a peak around 2θ=27° as determined by X-ray diffraction measurement by the half-width value (Δ2θ), is 18,092 or more.
[2] The antimony-doped tin oxide according to [1], wherein in (a), the half-width value (Δ2θ) is 0.21 or less.
[3] The antimony-doped tin oxide according to [1], wherein in (b), the content of the antimony oxide is from 2.8 to 9.3 wt% based on the weight of the antimony-doped tin oxide.
[4] The antimony-doped tin oxide according to [1], wherein the degree of crystallinity is 58,427 or more.
[5] The antimony-doped tin oxide according to [1], wherein the degree of crystallinity is 78,020 or more.
[6] The antimony-doped tin oxide according to [1], wherein when a coating film having a thickness of 70 µm and a solid content weight ratio of the antimony-doped tin oxide of 11.6 wt% is formed by dispersing the antimony-doped tin oxide in varnish containing an acrylic polymer and silicone and then coating and drying the dispersion on a substrate, and the solar reflectance of the coating film is measured in conformity with JIS K5602, the value obtained by subtracting the average reflectance in the wavelength region of 780 to 1,100 nm from the average reflectance in the wavelength region of 380 to 780 nm is 3.00% or more.
[7] An infrared-absorbing pigment consisting of the antimony-doped tin oxide according to any one of [1] to [6].
[8] An infrared-absorbing ink containing the infrared-absorbing pigment according to [7].
[9] A printed matter having a print part printed with the infrared-absorbing ink according to [8].
[10] The printed matter according to [9], wherein when the solid content weight ratio of the antimony-doped tin oxide contained in the print part is 11.6 wt%, the peak value of the reflectance in the infrared wavelength region of 780 to 1,100 nm is 28.776% or less.
[11] A method for producing an antimony-doped tin oxide, comprising an aerated firing step of firing an antimony-doped tin oxide feedstock under aeration.
[12] The method according to [11], comprising, after the aerated firing step,
   a cooling step of cooling the antimony-doped tin oxide at a cooling rate of 200 °C/hour or more.
[13] The method according to [11] or [12], comprising, before the aerated firing step,
   a mixing step of mixing a tin compound and an antimony compound to obtain a mixture, and
   a closed firing step of firing the mixture in a closed system to obtain the antimony-doped tin oxide feedstock.
[14] The method according to [13], comprising, between the closed firing step and the aerated firing step,
   a closed cooling step of cooling the antimony-doped tin oxide feedstock in a closed system.

### EFFECTS OF THE INVENTION

According to the present invention, the infrared absorption effect can be enhanced by increasing the crystallinity of the antimony-doped tin oxide, so that even when the amount used of antimony oxide is reduced, the infrared absorption effect can be sufficiently exerted.

### BRIEF DESCRIPTION OF THE DRAWINGS

[Fig. 1] Fig. 1 is an operation flow chart showing one embodiment of the method of the present invention for producing an antimony-doped tin oxide.
[Fig. 2] Fig. 2(A) is a view showing the results of X-ray diffraction of the antimony-doped tin oxide of Example 1 (antimony oxide content percentage: 0.7 wt%, with aerated firing and aerated cooling), and Fig. 2(B) is a view showing the results of X-ray diffraction of the antimony-doped tin oxide of Example 2 (antimony oxide content percentage: 2.8 wt%, with aerated firing and aerated cooling).
[Fig. 3] Fig. 3(A) is a view showing the results of X-ray diffraction of the antimony-doped tin oxide of Example 3 (antimony oxide content percentage: 5.3 wt%, with aerated firing and aerated cooling), and Fig. 3(B) is a view showing the results of X-ray diffraction of the antimony-doped tin oxide of Example 4 (antimony oxide content percentage: 9.3 wt%, with aerated firing and aerated cooling).
[Fig. 4] Fig. 4(A) is a view showing the results of X-ray diffraction of the antimony-doped tin oxide of Example 5 (firing and cooling commercial product under aeration at a cooling rate of 200 °C/hour or more, antimony oxide content percentage: 2.7 wt%), and Fig. 4(B) is a view showing the results of X-ray diffraction of the antimony-doped tin oxide of Example 6 (firing and cooling commercial product under aeration at a cooling rate of less than 200 °C/hour, antimony oxide content percentage: 2.7 wt%).
[Fig. 5] Fig. 5 is a view showing the results of X-ray diffraction of the antimony-doped tin oxide of Example 7 (firing and cooling a mixture of metastannic acid and antimony trioxide under aeration, antimony oxide content percentage: 4.2 wt%).
[Fig. 6] Fig. 6(A) is a view showing the results of X-ray diffraction of the antimony-doped tin oxide of Comparative Example 1 (antimony oxide content percentage: 9.9 wt%, commercial product), and Fig. 6(B) is a view showing the results of X-ray diffraction of the antimony-doped tin oxide of Comparative Example 2 (antimony oxide content percentage: 2.8 wt%, without aerated firing, without aerated cooling).
[Fig. 7] Fig. 7 is a conceptual view schematically showing the method for calculating the degree of crystallinity.
[Fig. 8] Fig. 8 is a graph showing the effect of the antimony oxide content percentage on the reflectance in the condition of a wavelength of 200 to 2,500 nm.
[Fig. 9] Fig. 9 is a graph showing the effect of the aerated firing step on the reflectance in the condition of a wavelength of 200 to 2,500 nm and an antimony oxide content percentage of 2.7 to 2.8 wt%.
[Fig. 10] Fig. 10 is a graph showing the effect of the aerated firing step on the reflectance and antimony content percentage of the commercially available antimony-doped tin oxide feedstock in the condition of a wavelength of 200 to 2,500 nm.
[Fig. 11] Fig. 11 is a graph showing the effect of the aerated firing step on the reflectance of a mixture of metastannic acid and antimony trioxide in the condition of a wavelength of 200 to 2,500 nm.

### MODE FOR CARRYING OUT THE INVENTION

The embodiments of the antimony-doped tin oxide, infrared-absorbing pigment, infrared-absorbing ink, printed matter and production method of an antimony-doped tin oxide of the present invention are described below.

The antimony-doped tin oxide of the present invention contains tin oxide and antimony oxide. The content of antimony oxide is preferably, based on the weight of the antimony-doped tin oxide, about 0.5 wt% or more, about 1.0 wt% or more, about 1.5 wt% or more, about 2.0 wt% or more, about 2.5 wt% or more, or about 2.8 wt% or more, and the content is preferably about 10.0 wt% or less, about 9.5 wt% or less, about 9.3 wt% or less, about 8.0 wt% or less, about 7.0 wt% or less, about 6.0 wt% or less, about 5.5 wt% or less, about 5.0 wt% or less, about 4.0 wt% or less, about 3.5 wt% or less, or about 3.0 wt% or less. The content of antimony oxide is more preferably, based on the weight of the antimony-doped tin oxide, from about 2.5 to about 9.3 wt%, from about 2.8 to about 9.3 wt%, from about 2.8 to about 5.5 wt%, or from about 2.8 to about 3.5 wt%.

The conventional antimony-doped tin oxide must contain an antimony oxide in excess of 10 wt% so as to obtain a transparent electrically-conductive material having a sufficient electrically-conducting property. On the other hand, in the antimony-doped tin oxide of the present invention, as described above, the amount used of antimony oxide can be reduced, compared with the conventional antimony-doped tin oxide.

However, since the antimony oxide is believed to fulfill the role of absorbing an infrared ray by intruding into the crystal lattice of tin oxide, mere reduction in the amount used thereof leads to a decrease in the infrared absorption effect in response to the reduction.

For suppressing the decrease in the infrared absorption effect, in the antimony-doped tin oxide of the present invention, the half-width value (Δ2θ) of a peak around 2θ=27° as determined by X-ray diffraction measurement is 0.35 or less, and/or the degree of crystallinity, which is a value obtained by dividing the peak value of a peak around 2θ=27° as determined by X-ray diffraction measurement by the half-width value (Δ2θ), is 18,092 or more.

The infrared absorption effect is an effect brought about by solid solution formation (intrusion) of antimony oxide in the crystal lattice of tin oxide that is the main component. Specifically, antimony oxide is incorporated into tin oxide as the main component when producing the antimony-doped tin oxide.

Accordingly, in the case where a solid solution of antimony oxide is adequately formed in the crystal lattice of tin oxide, the antimony-doped tin oxide of the present invention can appropriately maintain the crystal structure, whereby even when the antimony oxide content in the antimony-doped tin oxide is small (for example, at least 0.5 wt%), the infrared absorption effect can be exerted. At this time, for example, in the X-ray diffraction measurement, a sharp peak is observed around 2θ=27°.

On the other hand, for example, as in the conventional antimony-doped tin oxide, when antimony oxide forming no solid solution in the crystal lattice of tin oxide is present as an impurity, the impurity is considered not to contribute to the infrared absorption effect.

In this case, antimony oxide in the portion not contributing to the infrared absorption effect remains as it is as a useless raw material (impurity). In this meaning, the amount used of antimony oxide has been needlessly increased when producing an antimony-doped tin oxide. Therefore, the present inventors have made many studies on this impurity, as a result, found out that when the half-width value (Δ2θ) of the antimony-doped tin oxide is wide and/or the degree of crystallinity (when a substance is crystallized, the ratio of the crystallized portion to the entire substance) is low, the proportion of antimony oxide as an impurity increases, whereas when the half-width value (Δ2θ) is narrow and/or the degree of crystallinity is high, the proportion of antimony oxide as an impurity decreases.

The technique for enhancing the crystallinity of the antimony-doped tin oxide while removing antimony oxide as an impurity includes, for example, the later-described aerated firing and the later-described vaporization refining.

In order to reduce the amount used of antimony oxide to the minimum, the present invention provides an antimony-doped tin oxide where the half-width value (Δ2θ) is narrowed and/or the degree of crystallinity is increased. When the half-width value (Δ2θ) is narrowed or the degree of crystallinity is increased, the proportion of impurity is reduced, and antimony oxide can effectively form a solid solution, making it possible to enhance the infrared absorption effect.

Accordingly, in X-ray diffraction measurement, by adjusting the half-width value (Δ2θ) of a peak around 2θ=27° to 0.35 or less and/or adjusting the degree of crystallinity around 2θ=27° to 18,092 or more, a sufficient infrared absorption effect can be exerted even though the amount used of antimony oxide is suppressed.

In this connection, in the description of the present invention, at the time of measurement of X-ray diffraction, a commercially available X-ray diffractometer may be used, and an arbitrary scan speed may be selected, but the cumulated number is set to 1 time.

In the antimony-doped tin oxide of the present invention, in order to sufficiently bring out the infrared absorption effect while reducing the amount used of antimony oxide, the half-width value (Δ2θ) of a peak around 2θ=27° is preferably 0.30 or less, 0.25 or less, 0.21 or less, 0.20 or less, or 0.19 or less.

In the antimony-doped tin oxide of the present invention, the degree of crystallinity around 2θ=27° is preferably 58,427 or more, more preferably 78,020 or more.

When the degree of crystallinity of the antimony-doped tin oxide is 58,427 or more, particularly 78,020 or more, the proportion of the impurity is more reduced, and antimony oxide can effectively form a solid solution to more enhance the infrared absorption effect. Therefore, according to the present invention, the infrared absorption effect can be sufficiently exerted, despite reduction in the amount used of antimony oxide.

It is also preferable that when a coating film having a thickness of 70 µm and a solid content weight ratio of the antimony-doped tin oxide of about 11.6 wt% is formed by dispersing the antimony-doped tin oxide in varnish containing an acrylic polymer and silicone and then coating and drying the dispersion on a substrate, and the solar reflectance of the coating film is measured in conformity with JIS K5602, the value obtained by subtracting the average reflectance in the wavelength region of 780 to 1,100 nm from the average reflectance in the wavelength region of 380 to 780 nm is about 3.00% or more.

In this connection, when the value obtained by subtracting the average reflectance in the wavelength region of 780 to 1,100 nm from the average reflectance in the wavelength region of 380 to 780 nm is 3.00% or more, the visible light absorptivity of the antimony-doped tin oxide is relatively low, i.e., the visible light transparency of the antimony-doped tin oxide is relatively high. Therefore, the antimony-doped tin oxide can be used in wide applications without being bound by the color that the antimony-doped tin oxide takes on.

The value obtained by subtracting the average reflectance in the wavelength region of 780 to 1,100 nm from the average reflectance in the wavelength region of 380 to 780 nm is more preferably about 4.80% or more, or about 4.85% or more, and is even more preferably about 99% or less, about 90% or less, or about 80% or less.

The infrared-absorbing pigment of the present invention is an infrared-absorbing pigment consisting of the antimony-doped tin oxide described above.

According to the infrared-absorbing pigment of the present invention, the above-described functions and effects of the antimony-doped tin oxide can be realized by an infrared-absorbing pigment. Therefore, a high-quality infrared-absorbing pigment that can sufficiently exert an infrared absorption effect while reducing the amount used of antimony oxide, and complies with predetermined safety standards, etc., can be provided.

The infrared-absorbing ink of the present invention is an infrared-absorbing ink containing the infrared-absorbing pigment described above.

According to the infrared-absorbing ink of the present invention, the functions and effects of the infrared-absorbing pigment can be realized by an infrared-absorbing ink. Therefore, a high-quality infrared-absorbing ink that can sufficiently exert an infrared absorption effect while reducing the amount used of antimony oxide, and complies with predetermined safety standards, etc., can be provided.

The printed matter of the present invention is a printed matter having a print part printed with the infrared-absorbing ink described above.

According to the printed matter of the present invention, by virtue of having a print part in which a letter, a figure, etc., is printed with the infrared-absorbing ink described above, a printed matter sufficiently exerting an infrared absorption effect while reducing the amount used of antimony oxide can be obtained. In addition, not only a high-quality printed matter but also an environment-friendly printed matter can be provided.

When the solid content weight ratio of the antimony-doped tin oxide contained in the print part of the present invention is 11.6 wt%, the peak value of the reflectance in the infrared wavelength region of 780 to 1,100 nm is preferably 28.776% or less.

By configuring a printed matter having a low infrared reflectance in this way, the amount of antimony oxide contained in the print part can be reduced, and an infrared absorption effect can be sufficiently exerted.

The antimony-doped tin oxide of the present invention can be produced, for example, by the following method.

### [Production Method of Antimony-Doped Tin Oxide]

The method for producing an antimony-doped tin oxide of the present invention involves an aerated firing step of firing an antimony-doped tin oxide feedstock under aeration.

In the present invention, the aerated firing or cooling encompasses not only firing or cooling carried out while flowing a firing or cooling atmosphere, but also firing or cooling carried out in an opened space where outside air is not blocked (hereinafter, sometimes referred to as "opened system").

In the method for producing an antimony-doped tin oxide of the present invention, the half-width value of the antimony-doped tin oxide can be made narrower than that of conventional products, and/or the degree of crystallinity of the antimony-doped tin oxide can be made higher than that of the conventional products.

The method for producing an antimony-doped tin oxide of the present invention involves an aerated firing step, whereby an antimony-doped tin oxide capable of sufficiently exerting an infrared absorption effect, despite reduction in the amount used of antimony oxide, can be produced.

In the description of the present invention, the "antimony-doped tin oxide feedstock" is a raw material that becomes the antimony-doped tin oxide of the present invention through aerated firing, and is, for example, a raw material satisfying at least one of following conditions (i) to (v):
(i) a mixture of a tin compound and an antimony compound;
(ii) a product obtained by firing the mixture of (i) in a closed system (a sealed space where outside air is blocked);
(iii) a product obtained by cooling the product of (ii) in a closed system;
(iv) a crude antimony-doped tin oxide obtained by a coprecipitation firing method using a tin compound and an antimony compound as raw materials; and
(v) a crude antimony-doped tin oxide where the half-width value (Δ2θ) of a peak around 2θ=27° as determined by X-ray diffraction measurement exceeds 0.35 and/or the degree of crystallinity, which is a value obtained by dividing the peak value of a peak around 2θ=27° as determined by X-ray diffraction measurement by the half-width value (Δ2θ), is less than 18,092.

As apparent also from (ii) and (iii), the firing step and the cooling step have been heretofore carried out in a closed system, and therefore, antimony oxide forming no solid solution in the crystal lattice of tin oxide is present as an impurity in the conventional antimony-doped tin oxide and does not contribute to an infrared absorption effect, nevertheless, the conventional antimony-doped tin oxide is an antimony-doped tin oxide having a large amount of antimony oxide.

The present inventors have found that removal of excess antimony oxide can be achieved by carrying out an aerated firing step and a subsequent cooling step. In the antimony-doped tin oxide obtained by the production method of the present invention, the half-width value is narrow and/or the degree of crystallinity is high, which are considered to be attributable to a small amount of antimony oxide as an impurity. On the other hand, it is considered that if excess antimony is present in the antimony-doped tin oxide, X-ray will be scattered at the measurement by X-ray diffraction and the peak will be low.

In the description of the present invention, the production method of an antimony-doped tin oxide involving at least an aerated firing step and a subsequent aerated cooling step is referred to as "vaporization refining process".

As for the antimony oxide forming a solid solution in the crystal lattice, in the production method of the present invention, the crystal structure can be adequately maintained with partial removal of the antimony oxide by an aerated firing step, so that a high infrared absorption effect can be maintained. Therefore, by virtue of passing through an aerated firing step, a high infrared absorption effect can be obtained while reducing the amount used of antimony oxide.

The "tin compound" includes, for example, metastannic acid, sodium stannate trihydrate, niobium-3 tin, phenbutatin oxide, tin oxide, and tin hydride.

The "antimony compound" includes, for example, antimony oxide, indium antimonide, and stibine.

The production method of an antimony-doped tin oxide of the present invention may involve, if desired, the following steps after the aerated firing step:
an aerated cooling step of cooling the obtained antimony-doped tin oxide under aeration; and/or
a cooling step of cooling the obtained antimony-doped tin oxide at a cooling rate of 200 °C/hour or more.

For example, the aerated cooling step may be carried out by feeding air into a furnace (specifically, cooling to some degrees Celsius after some hours can be set by the setting of the cooling apparatus).

Assuming that the time required for a sealed cooling step (so-called natural cooling) is 10 hours, cooling for a shorter time (for example, about 5 hours) than that may be carried out during the aerated cooling step. Therefore, cooling during the aerated cooling step is more aggressive than the natural cooling.

During the aerated cooling step or mere cooling step, the cooling rate is preferably 200 °C/hour or more, 215 °C/hour or more, or 216 °C/hour or more.

The production method of an antimony-doped tin oxide of the present invention also preferably involves, before the aerated firing step, the following mixing step and closed firing step:
a mixing step of mixing a tin compound and an antimony compound to obtain a mixture; and
a closed firing step of firing the mixture in a closed system to obtain the antimony-doped tin oxide feedstock.

The production method of an antimony-doped tin oxide of the present invention preferably further involves, between the closed firing step and the aerated firing step, a closed cooling step of cooling the antimony-doped tin oxide feedstock in a closed system.

By virtue of the mixing step, closed firing step and closed cooling step, an antimony-doped tin oxide feedstock satisfying (i) to (iii), respectively, can be obtained.

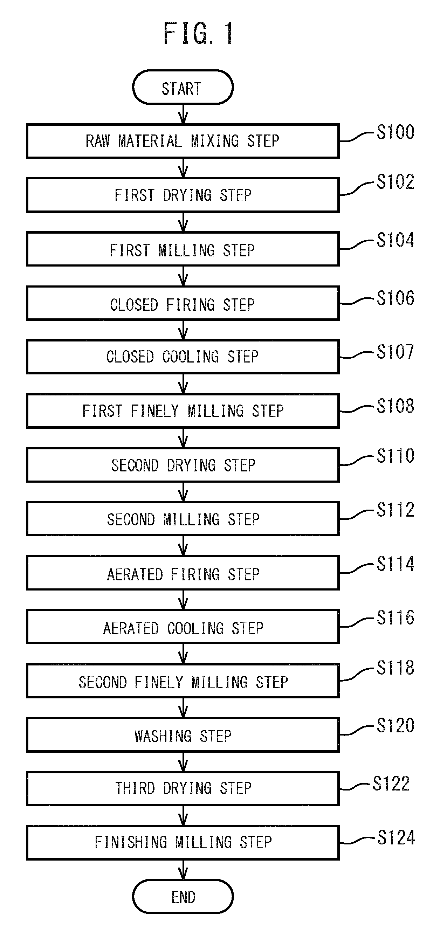

Each step in the production method of an antimony-doped tin oxide according to one embodiment of the present invention is described below by referring to Fig. 1.

### [Raw Material Mixing Step: Step S100]

In this step, a tin compound and an antimony compound, which are raw materials of an antimony-doped tin oxide, are mixed. Specifically, powdery metastannic acid (H₂SnO₃) and powdery antimony trioxide (Sb₂O₃) are mixed. The blending ratio is set to a ratio of "metastannic acid (H₂SnO₃)=90 wt%, antimony trioxide (Sb₂O₃)=10 wt%", and milling/mixing is carried out in a ball mill by using water as the medium. The content of antimony trioxide is preferably 10 wt% but may be on the order of 5 to 20 wt%.

### [First Drying Step: Step S102]

In this step, the material mixed in the previous raw material mixing step (step S100) is dried at 320°C, whereby water used when mixing the material in the previous raw material mixing step (step S100) can be removed.

### [First Milling Step: Step S104]

In this step, the material dried in the previous first drying step (step S102) is milled. Specifically, the dried material is milled into a powdery state by a high-performance centrifugal mill.

### [Closed Firing Step: Step S106]

In this step, the material milled in the previous first milling step (step S104) is fired. Specifically, the material milled in the previous first milling step (step S104) is fired in a closed system at 1,000 to 1,300°C for 1 hour or more. In the closed firing step, firing is carried out in a closed system and therefore, the content percentage (solid solution ratio) of antimony oxide is maintained at about 10 wt%.

### [Closed Cooling Step: Step S107]

In this step, the material fired in the previous closed firing step (step S106) is cooled. Specifically, cooling is started simultaneously with the completion of the closed firing step to cool the fired material in a closed system, whereby an antimony-doped tin oxide feedstock in which tin (Sn) and antimony (Sb) are compounded is produced. The antimony-doped tin oxide feedstock is produced through the closed firing step (step S106) and the closed cooling step (step S107). In addition, the cooling may be natural cooling, or the fired material may be cooled under aeration, similarly to the later-described aerated cooling step.

### [First Finely Milling Step: Step S108]

The material cooled in the previous closed cooling step (step S107) may be milled by carrying out this step, if desired. Specifically, the material after firing can be milled with a bead mill by using water as the medium until the particle diameter (the median diameter by the laser diffraction scattering method) becomes about 100 nm. In the case of omitting this step, the method may continuously proceed to later steps in the apparatus used in a step (for example, step S106 or step S107) prior to this step.

### [Second Drying Step: Step S110]

The material milled in the previous first finely milling step (step S108) may be heated at 320°C and thereby dried by carrying out this step, if desired. By this step, water used when milling the material in the previous first finely milling step (step S108) can be removed. In the case of omitting this step, the method may continuously proceed to later steps in the apparatus used in a step (for example, step S106 or step S107) prior to this step.

### [Second Milling Step: Step S112]

The material dried in the previous second drying step (step S110) may be milled by carrying out this step, if desired. Specifically, the dried material can be milled into a powdery state by a high-performance centrifugal mill. In the case of omitting this step, the method may continuously proceed to later steps in the apparatus used in a step (for example, step S106 or step S107) prior to this step.

### [Aerated Firing Step: Step S114]

In this step, the material milled in the previous second milling step (step S112) is fired. Specifically, the material milled in the previous second milling step (step S112) is fired under aeration (a state of keeping aerating the inside of the furnace) at 1,000 to 1,300°C for 1 to 12 hours. By this aerated firing step, the antimony-doped tin oxide feedstock produced in the closed firing step is again fired under aeration. In the aerated firing step, firing is carried out under aeration, so that excess antimony oxide (Sb) in tin oxide (SnO₂) can be vaporized and disappear. The final antimony oxide content (solid solution ratio) becomes approximately from 0.5 to 9.3 wt%.

### [Aerated Cooling Step: Step S116]

In this step, the antimony-doped tin oxide fired in the previous aerated firing step (step S114) is cooled under aeration.

Specifically, cooling is started simultaneously with the completion of the aerated firing step and the temperature in the firing furnace is lowered to room temperature (for example, on the order of 20 to 25°C) within 300 minutes, whereby the again fired antimony-doped tin oxide is cooled. The aerated cooling step is carried out under aeration.

In the case of carrying out the vaporization refining process in the embodiment, the aerated cooling step (step S116) may be carried out after the aerated firing step (step S114).

### [Second Finely Milling Step: Step S118]]

In this step, the refined material cooled in the previous aerated cooling step (step S116) is milled. Specifically, the material after refining is milled with a bead mill by using water as the medium until the particle diameter (the median diameter by the laser diffraction scattering method) becomes about 100 nm.

### [Washing Step: Step S120]

In this step, impurities in the material adjusted in its particle size in the previous second finely milling step (step S118) are removed by water washing. The impurities are a small amount of electrolytes (for example, sodium (Na) and potassium (K), etc.), and whether the impurities are sufficiently removed or not can be confirmed by the electrical conductivity.

### [Third Drying Step: Step S122]

In this step, the material washed in the previous washing step (step S120) is heated at 145°C and thereby dried. By this step, water used when washing the material in the previous washing step (step S120) can be removed and at the same time, the material after washing can be dried.

### [Finishing Milling Step: Step S124]

In this step, the material dried in the previous third drying step (step S122) is milled. Specifically, the dried material is finish-milled by a high-performance centrifugal mill until the particle diameter (the median diameter by the laser diffraction scattering method) becomes approximately from tens of nm to 100 µm.

The antimony-doped tin oxide of the present invention is produced by passing through respective steps described above.

### EXAMPLES

### <Production of Antimony-Doped Tin Oxide>

The materials used are as follows:
metastannic acid: metastannic acid produced by Nihon Kagaku Sangyo Co., Ltd.
antimony trioxide: PATOX-CF (registered trademark; produced by NSK Ltd.)
antimony-doped tin oxide feedstock (commercial product): ELCOM (registered trademark) P-special product (content of antimony oxide: 9.9 wt%, not fired under aeration, not cooled under aeration) produced by JGC Catalysts and Chemicals Ltd.

The firing furnace used is a shuttle-type firing furnace with cooling device (manufactured by Tsukasa Denkiro Seisakusho).

### [Example 1]

Steps 100 to 124 were carried out as illustrated in Fig. 1 by using 118.8 g of metastannic acid and 1 g of antimony trioxide.

Specifically, an antimony-doped tin oxide having an antimony oxide content of 0.7 wt% was obtained by a method involving, as shown in Table 1 below, a mixing step (S100), a closed firing step (S106), a closed cooling step (S107), an aerated firing step (S114) and an aerated cooling step (S116).

The aerated firing step (S114) was carried out over about 8 hours by setting the temperature in the aerated furnace to about 1,100°C. The aerated cooling step (S116) was carried out at a cooling rate of about 200 °C/hour or more.

### [Examples 2 to 7 and Comparative Examples 1 and 2]

Examples 2 to 7 and Comparative Examples 1 and 2 were carried out as shown in Table 1 below. With respect to Examples 2 to 4, the antimony oxide content in the obtained antimony-doped tin oxide was changed by varying the weights of metastannic acid and antimony trioxide and/or the time of the aerated firing step (S114).

On the other hand, in Comparative Example 2, the mixing step (S100), the closed firing step (S106) and the closed cooling step (S107) were carried out in the same manner as in Example 1, but a product having the same antimony oxide content as in Example 2 was obtained without carrying out the aerated firing step (S114) and the aerated cooling step (S116).

In Comparative Example 1, an antimony-doped tin oxide feed stock that is a commercial product was prepared. In Examples 5 and 6, the commercial product of Comparative Example 1 was subjected to the aerated firing step (S114) and the aerated cooling step (S116). The cooling rate of the aerated cooling step (S116) was 200 [°C/h] or more in Example 5 and less than 200 [°C/h] in Example 6.

In Example 7, a mere mixture of metastannic acid and antimony trioxide was subjected to the aerated firing step (S114) and the aerated cooling step (S116).

### [Method for Measuring Antimony Oxide Content in Product]

Measurement of the antimony oxide content in the product was carried out by the order analysis of fluorescent X-ray analyzer RIX-1000 (manufactured by Rigaku Corporation). As for the measurement conditions, the measurement was carried out by reducing the antimony-doped tin oxide to powder. The powder was measured under the condition of a particle diameter (the median diameter by the laser diffraction scattering method) of 120 nm.

### [X-Ray Diffraction Measurement of Product]

With respect to each product of the Examples and Comparative Examples, X-ray diffraction was carried out, and the value of crystallinity degree was calculated from the measurement results.

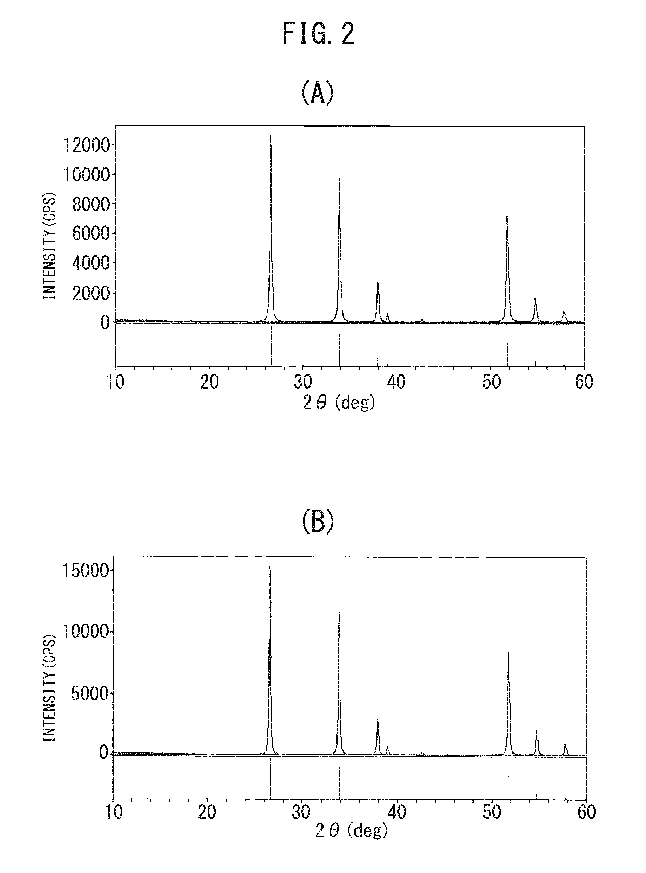

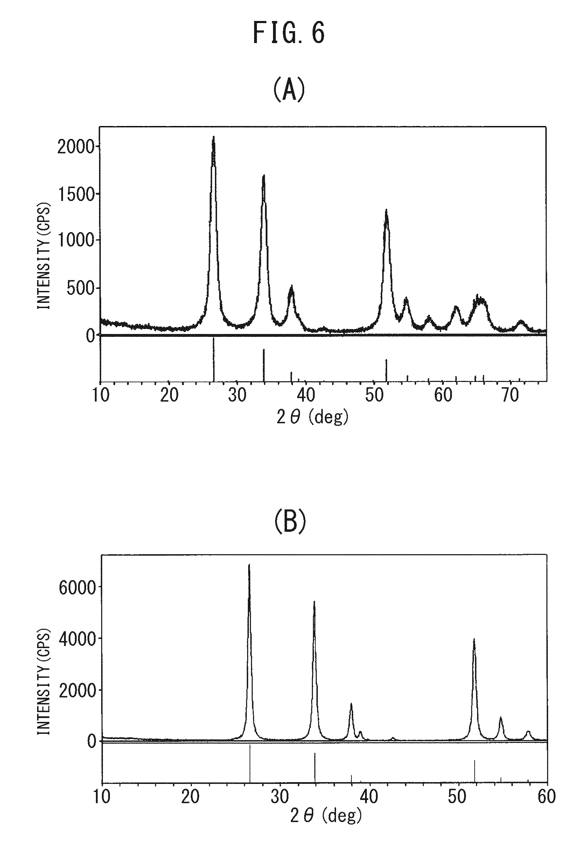

As shown in Table 1, Figs. 2 to 5 are views showing the results of X-ray diffraction by the antimony-doped tin oxide of the Examples, and Fig. 6 is a view showing the results of X-ray diffraction of the Comparative Examples. In each of the Figures, the ordinate indicates the "intensity (CPS)" of reflected light when irradiated with X-ray, and the abscissa indicates "2θ (deg)".

### [CPS]

The "CPS (Count Per Second)" as used herein indicates the number of photons reflected per second when irradiating a measurement target with X-ray, and can be considered as the intensity (level) of reflected light.

### [2θ]

The "2θ" indicates the irradiation angle when irradiating a measurement target with X-ray. The reason why "2θ" is employed is because when the angle (incident angle) of the irradiated X-ray is θ, the reflection angle also becomes θ and the total angle of incident angle and reflection angle becomes 2θ.

### [Calculation Method of Degree of Crystallinity]

The degree of crystallinity is calculated based on the measurement results of X-ray diffraction (XRD). The equipment used and the measurement conditions are as follows.
(1) Equipment used: MultiFlex (X-ray diffractometer) manufactured by Rigaku Corporation
(2) Measurement conditions:
   Scan speed: 4.0°/min.
   Radiation source: 40 kV, 30 mA
   Cumulated number: 1 time

For example, the graph of Fig. 2(B) is a graph showing the results of X-ray diffraction by the antimony-doped tin oxide of Example 2. In the antimony-doped tin oxide of Example 2, the spots showing a great rise in the intensity of reflected light (the spots where the waveform rises) is generated in a plurality of portions.

Specifically, the spots are a spot around "2θ=27°", a spot around "2θ=34°", a spot around "2θ=38°", a spot around "2θ=52°", a spot around "2θ=55°", and a spot around "2θ=58°".

The degree of crystallinity is calculated using 2θ (deg) and the measured value of intensity (CPS), at a spot having a highest intensity of reflected light out of the spots showing an increase in the intensity of reflected light. In the antimony-doped tin oxide, the spot having a highest intensity of reflected light is a spot around "2θ=27°".

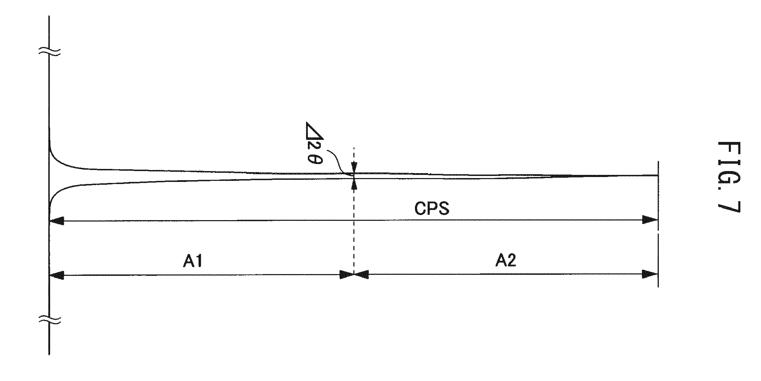

Fig. 7 is a conceptual view schematically showing the method for calculating the degree of crystallinity.

The degree of crystallinity indicates the ratio of the crystallized portion to the entire substance when a substance is crystallized, and here, the degree of crystallinity is defined as CPS/Δ2θ (half-width value). In other words, the degree of crystallinity is defined by the numerical value at a spot around 2θ=27°. In turn, the degree of crystallinity can be calculated from the measurement results of X-ray diffraction (XRD). In the graph shown, as the substance has a more regular crystal structure and contains less impurities, the peak of the waveform is larger and the tip of the waveform is sharper.

### [CPS]

CPS is the intensity (level) of reflected light and therefore, in the example shown, becomes the height of the waveform.

### [Δ2θ]

Δ2θ is the breadth of the half-value width corresponding to half the maximum value (peak value) of CPS obtained by X-ray diffraction measurement (in Fig. 7, length A1 and length A2 are the same length).

Accordingly, as the value of CPS is larger (as the peak of the waveform is higher), the value of crystallinity degree is larger. In addition, as the value of Δ2θ is smaller (as the half-value width is narrower), the value of crystallinity degree is larger.

In the case of irradiating a material as an inspection target with X-ray, depending on the angle of the irradiated X-ray, there are produced an angle at which reflected light is generated, and an angle at which reflected light is not generated. A substance has a constant angle at which reflected light is generated, and in the case of the same substance, the tendency of the waveform to increase or decrease is almost consistent. In this embodiment, the same substance, i.e., an antimony-doped tin oxide, is used in the Examples and Comparative Examples, and therefore, the position of 2θ where the value of CPS is maximum is consistently "2θ=27°".

With respect to Examples 1 to 7 and Comparative Examples 1 and 2, the half-width value (Δ2θ) of a peak around 2θ=27°, the intensity (CPS) around 2θ=27°, the degree of crystallinity (CPS/Δ2θ), and the figure number of the X-ray diffraction graph are shown in Table 1 below.

The graph of Fig. 2(A) is a graph showing the results of X-ray diffraction by the antimony-doped tin oxide of Example 1. In the antimony-doped tin oxide of Example 1, the intensity of reflected light is highest at a spot around "2θ=27°", and the maximum value of CPS is about 12,000. As regards Δ2θ, the width in the skirt portion of the waveform, where the value of CPS becomes a peak, is nearly the same as those of Examples 2 to 4. Accordingly, in Example 1, the degree of crystallinity is considered to be sufficient for an antimony-doped tin oxide. However, the antimony oxide content is 0.7 wt%, and it is considered that the infrared absorption effect is lower than in Examples 2 to 4 because the amount of antimony oxide forming a solid solution in the crystal lattice of tin oxide is small.

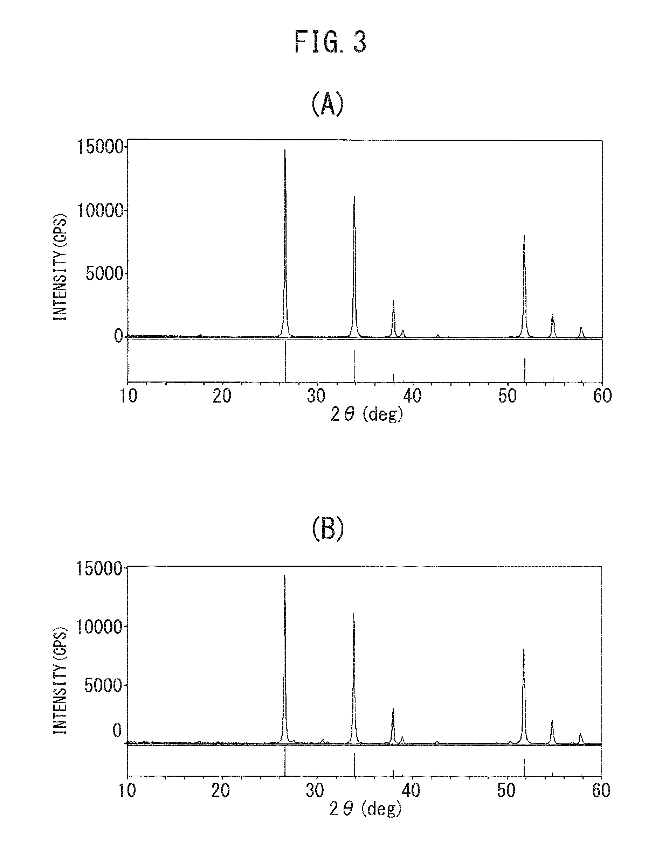

The graphs of Figs. 3(A) and (B) are graphs showing the results of X-ray diffraction by the antimony-doped tin oxides of Examples 3 and 4, respectively. In the antimony-doped tin oxides of Examples 3 and 4, the spot showing a highest intensity of reflected light is also a spot around "2θ=27°".

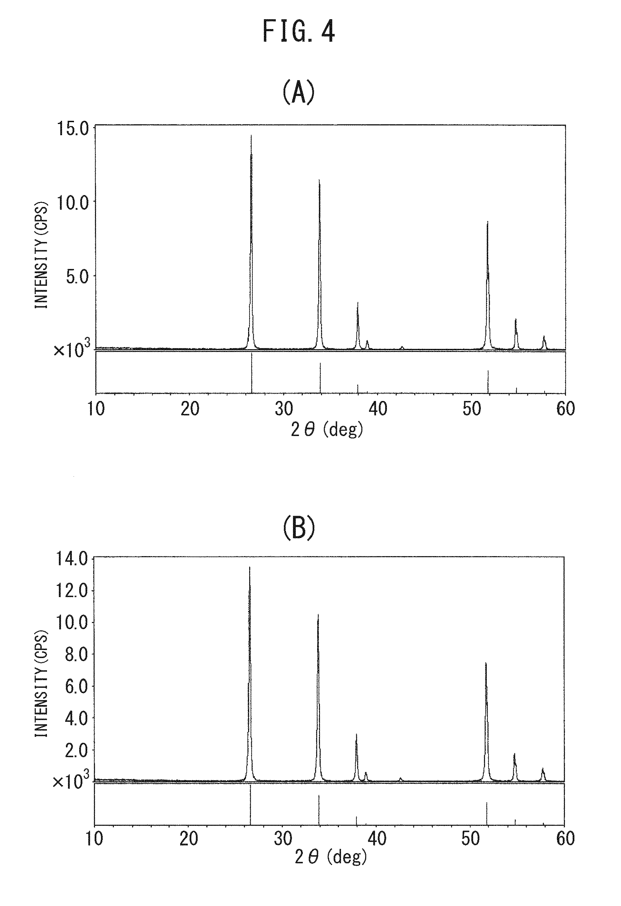

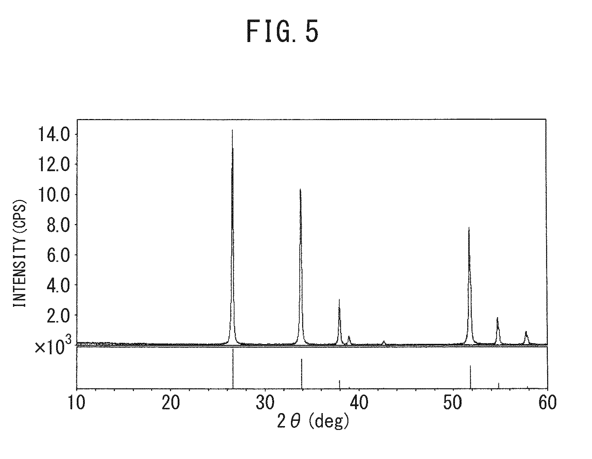

The graphs of Figs. 4(A) and (B) are graphs showing the results of X-ray diffraction by the antimony-doped tin oxides of Examples 5 and 6, respectively, and Fig. 5 is a graph showing the results of X-ray diffraction by the antimony-doped tin oxide of Example 7. In the antimony-doped tin oxides of Examples 5 to 7, the spot showing a highest intensity of reflected light is also a spot around "2θ=27°".

In all of the antimony-doped tin oxides of Examples 2 to 4, the maximum value of CPS is about 15,000, and the waveform appearing at a spot of a highest intensity of reflected light is also a sharp waveform where the tip is sharply pointed and the width of the skirt portion is narrow.

The graph of Fig. 6(A) is a graph showing the results of X-ray diffraction by the commercial product of Comparative Example 1. In the commercial product of Comparative Example 1, the spot showing a highest intensity of reflected light is a spot around "2θ=27°", but the value of CPS is extremely small (about 2,000) compared with those of Examples 1 to 7. In addition, as regards Δ2θ, the width of the skirt portion of the waveform where the value of CPS becomes a peak is wide compared with those of Examples 1 to 7. The cause thereof is considered to be a large proportion of impurities because the antimony-doped tin oxide was produced without using a vaporization refining process.

The graph of Fig. 6(B) is a graph showing the results of X-ray diffraction by the product of Comparative Example 2. In the product of Comparative Example 2, the spot showing a highest intensity of reflected light is a spot around "2θ=27°", but the value of CPS is small (CPS=6,860.0) compared with those of Examples 1 to 7. In addition, as regards Δ2θ, the width of the skirt portion of the waveform where the value of CPS becomes a peak is wide compared with those of Examples 1 to 7. The cause thereof is considered to be a large proportion of impurities because the antimony-doped tin oxide was produced without using the above-described vaporization refining process. This is understood also from the fact that the antimony oxide content of Comparative Example 2 is the same as that of Example 2, nevertheless, the degree of crystallinity of Comparative Example 2 is low compared with Example 2.

### [Measurement of Infrared Absorption Effect]

The measurement of the infrared absorption effect was carried out by measuring the optical reflectance by means of a spectrophotometer. The equipment used, the measurement conditions, and the measuring method are as follows.
(1) Equipment used: Spectrophotometer V570 manufactured by JASCO Corporation
(2) Sample preparation conditions: 5 Parts of the infrared-absorbing pigment of each of the Examples and Comparative Examples was added to 95 parts of acryl/silicone-based varnish (Aqueous Sefukoto #800 Clear, produced by Urethane Giken Industry Co., Ltd.) and dispersed using a planetary dispersion mill to prepare an infrared-absorbing ink, and the ink was coated by a film applicator on a PET film of 200 µm in thickness and dried to form a print part having a film thickness of 70 µm in a dry state, whereby a coated film (sample printed matter) was prepared.
(3) Measurement method: A standard white plate was attached to the back surface of the coated film, and the reflectance was measured in the wavelength range of 200 to 2,500 nm. All of the infrared-absorbing pigments of the Examples and Comparative Examples were measured by adjusting the particle diameter (the median diameter by the laser diffraction scattering method) to 120 nm.

The reflectance of the standard white plate was set as a standard value of about 100%.

The measuring method above is compliant with "JIS K5602 Method for Determining Solar Reflectance of Coated Film". In addition, the solid content weight ratio of the infrared-absorbing pigment contained in the print part (pigment ratio) is calculated as follows. The acryl/silicone-based varnish of (2) above contains a solvent, etc., each of which volatizes and disappears during drying, in addition to solid matters, such as resin. Since the solid content weight ratio of the acryl/silicone-based varnish is 40 wt%, the solid content of the acryl/silicone-based varnish is 38 parts, and since the infrared-absorbing pigment is 5 parts, the solid content weight ratio of the infrared-absorbing pigment is 11.6 wt%. A resin and/or other additives account for the remaining 88.4 wt%.

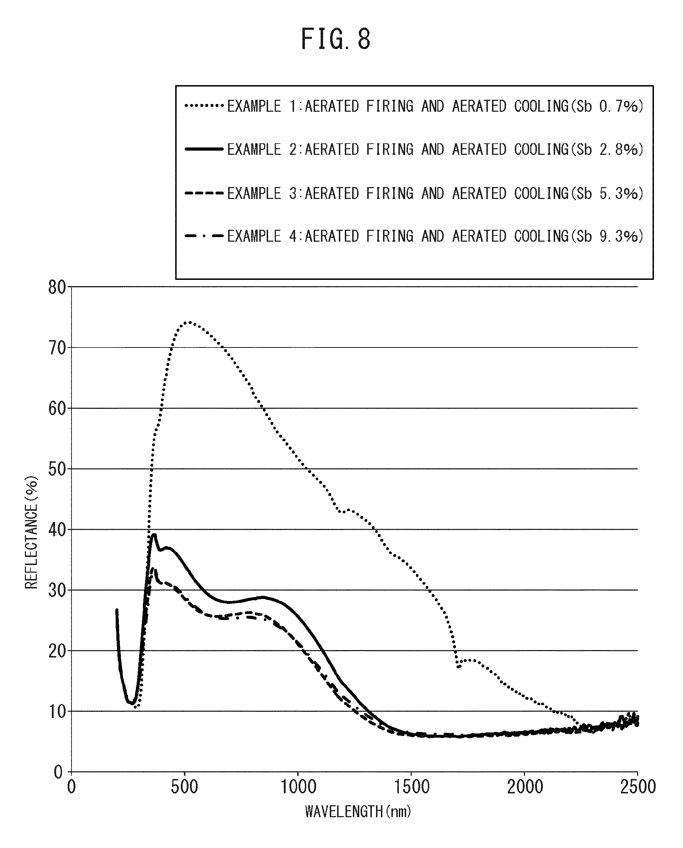

With respect to Examples 1 to 7 and Comparative Examples 1 and 2, the relationship between the wavelength of 200 to 2,500 nm and the reflectance is shown in Figs. 8 to 11, and the average reflectance, the maximum reflectance and the wavelength showing a maximum reflectance, in the wavelength regions of 380 to 780 nm and/or 780 to 1,100 nm, are shown in Table 1 below.

It is seen from Fig. 8 that the antimony-doped tin oxide where antimony oxide is forming a solid solution in the crystal lattice of tin oxide has an infrared absorption effect.

In the near infrared region (the region at a wavelength of 780 to 1,100 nm) that is used for general authenticity determination, the infrared absorption effect is preferably high. Among others, in the case of a general printing condition where the solid content weight ratio of the antimony-doped tin oxide pigment is 11.6 wt%, a reflectance of 30% or less is preferred, because there is a great difference between the print part containing the antimony-doped tin oxide and other portions, and ten out of ten people can discriminate the printed parts, facilitating use of the region for the authenticity determination. In this connection, as shown in Fig. 8, Examples 2 to 4 having an antimony oxide content percentage of 2.8 wt% or more maintain a reflectance of 30% or less in that region.

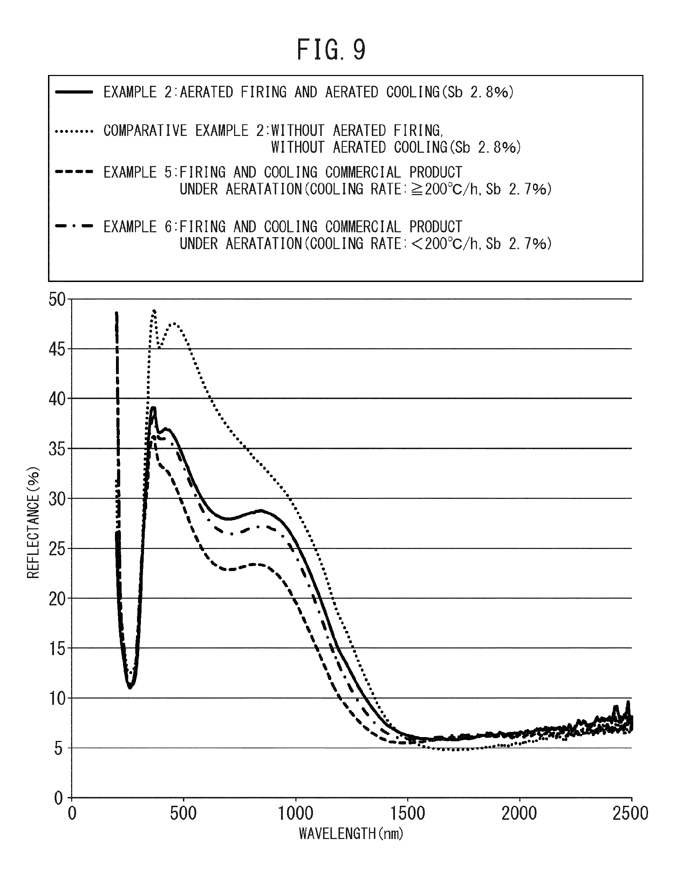

It is apparent from Fig. 9 that in Comparative Example 2 not passed through an aerated firing step, despite having an antimony oxide content percentage of 2.7 to 2.8 wt%, the infrared absorption effect is low, compared with Examples 2, 5 and 6 passed through an aerated firing step. In other words, the aerated firing step can increase the crystallinity of the antimony-doped tin oxide and thereby can enhance the infrared absorption effect. This is confirmed by comparing the crystallinity of Examples 2, 5 and 6 with that of Comparative Example 2 in Table 1 below.

Examples 5 and 6 were carried out under almost the same conditions, except for the cooling rate in the aerated cooling step (S116). As shown in Table 1, in Example 5 where the step was carried out at a cooling rate of 200 °C/hour or more, the half-width value (Δ2θ) is narrower and the degree of crystallinity is higher than in Example 6 where the step was carried out at a cooling rate of less than 200 °C/hour. In this connection, it is anticipated that although antimony oxide forming a solid solution in the crystal lattice of tin oxide may be removed even in a small amount through the aerated firing together with excess antimony oxide not forming a solid solution in the crystal lattice, the crystal lattice is maintained by aggressively cooling the antimony-doped tin oxide after the aerated firing. Accordingly, adjustment of the cooling rate to a range of 200 °C/hour or more in the aerated cooling step is considered to contribute to enhancement of the crystallinity of the antimony-doped tin oxide.

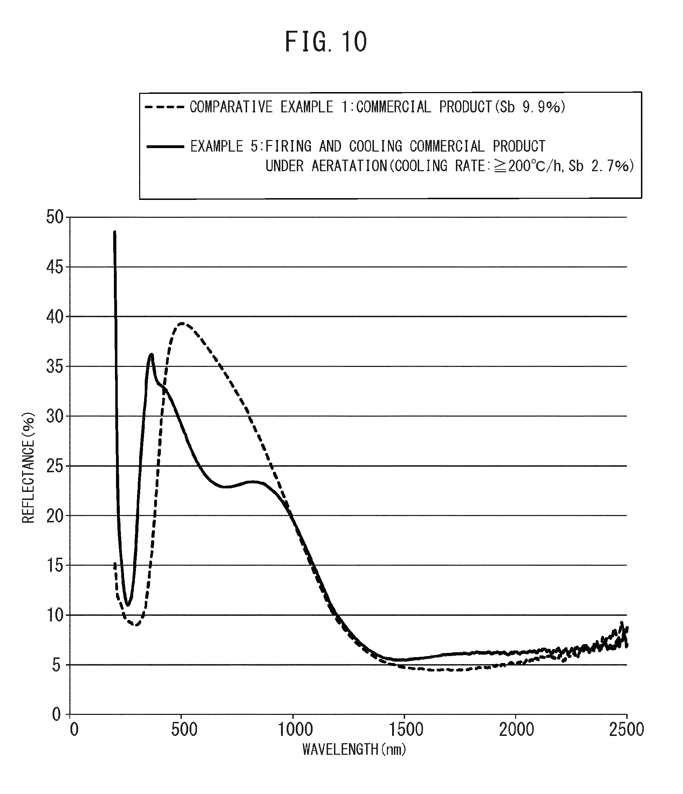

It is seen from Fig. 10 that by virtue of passing through an aerated firing step, even an antimony-doped tin oxide pigment as a commercial product having an antimony oxide content percentage of 9.9 wt% (Comparative Example 1) becomes an antimony-doped tin oxide having a sufficient infrared absorption effect and having an antimony oxide content percentage of 2.7 wt% (Example 5). More specifically, excess antimony oxide not forming a solid solution in the crystal lattice (i.e., an impurity not contributing to the infrared absorption effect) can be removed by the aerated firing step.

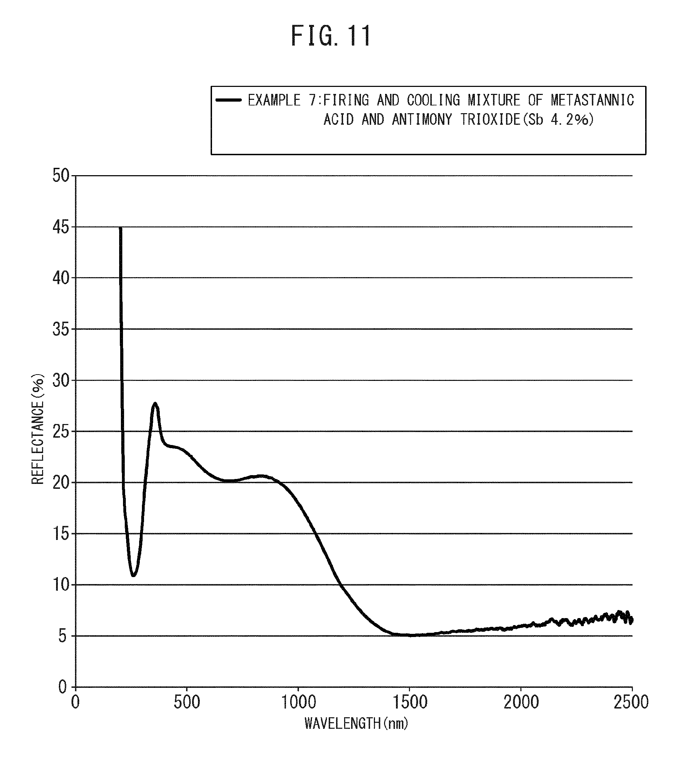

It is seen from Fig. 11 that even when a closed firing step and a closed cooling step are omitted, in other words, even when only a mixing step, an aerated firing step and an aerated cooling step are carried out, an antimony-doped tin oxide having a sufficient infrared absorption effect is obtained.

When comparing Examples 1 to 7 in Table 1 below, in Examples 1 to 6, the difference between the average reflectance in the visible wavelength region (from 380 to 780 nm) and the average reflectance in the infrared wavelength region (from 780 to 1,100 nm) is larger than in Example 7. Therefore, it is deemed that, compared with the antimony-doped tin oxide of Example 7, the antimony-doped tin oxides of Examples 1 to 6 can be used in wide applications without being bound by the color that the antimony-doped tin oxide takes on.

Accordingly, by producing an antimony-doped tin oxide through an aerated firing step, the crystallinity can be enhanced with a minimum antimony oxide content and in turn, an antimony-doped tin oxide having a sufficient infrared absorption effect can be produced.

Moreover, in the obtained antimony-doped tin oxide, despite an antimony oxide content of 9.3 wt% or less, an infrared absorption effect almost equal to or greater than that of an antimony-doped tin oxide having an antimony oxide content of 9.9 wt% is achieved.

[Table 1]

**Table 1**

| | | Example | | | | | | | Comparative Example | |
|---|---|---|---|---|---|---|---|---|---|---|
| | | 1 | 2 | 3 | 4 | 5 | 6 | 7 | 1 (commercial product) | 2 |
| Raw material | Metastannic acid (g) | 118.8 | 115.2 | 108.0 | 96.0 | N.D. | N.D. | 90.0 | No Data (N.D.) | 116.4 |
| | Antimony trioxide (g) | 1 | 4 | 10 | 20 | N.D. | N.D. | 10 | N.D. | 3 |
| Mixing step S100 | done/not done | done | done | done | done | N.D. | N.D. | done | N.D. | done |
| Closed firing step S106 | done/not done | done | done | done | done | N.D. | N.D. | not done | N.D. | done |
| Closed cooling step S107 | done/not done | done | done | done | done | N.D. | N.D. | not done | N.D. | done |
| Aerated firing step S114 | done/not done | done | done | done | done | done | done | done | not done | not done |
| | Temperature (°C) | 1100 | 1100 | 1100 | 1100 | 1100 | 1100 | 1100 | - | - |
| | Time (h) | 8 | 8 | 1 | 1 | 8 | 8 | 8 | - | - |
| Aerated cooling step S116 | done/not done | done | done | done | done | done | done | done | not done | not done |
| | Cooling rate (°C/h) | 200 or more | 200 or more | 200 or more | 200 or more | 200 or more | 200 or less | 200 or more | - | - |
| Antimony oxide content percentage in product (wt%) | | 0.7 | 2.8 | 5.3 | 9.3 | 2.7 | 2.7 | 4.2 | 9.9 | 2.8 |
| Crystallinity | Half-width value (Δ2θ) around 2θ=27° | 0.22 | 0.18 | 0.19 | 0.19 | 0.18 | 0.20 | 0.18 | 0.99 | 0.38 |
| | CPS around 2θ=27° | 12666 | 15423 | 14866 | 14465 | 14463 | 13460 | 14256 | 2098 | 6860 |
| | Degree of crystallinity (CPS/Δ2θ) | 58426 | 84883 | 79843 | 78020 | 79131 | 66587 | 78385 | 2112 | 18091 |
| | Relationship between 2θ and intensity (figure number) | Fig. 2 (A) | Fig. 2 (B) | Fig. 3 (A) | Fig. 3 (B) | Fig. 4 (A) | Fig. 4 (B) | Fig. 5 | Fig. 6(A) | Fig 6(B) |
| Optical reflectivity | Maximum reflectance in wavelength region of 780 to 1100 nm (%) | 64.221 | 28.776 | 26.271 | 25.499 | 23.414 | 27.210 | 20.660 | 31.150 | 35.014 |
| | Wavelength showing maximum reflectance in 780 to 1100 nm (nm) | 780 | 848 | 784 | 792 | 820 | 840 | 836 | 780 | 780 |
| | Maximum reflectance in wavelength region of 380 to 780 nm (%) | 74.115 | 37.26 | 31.886 | 31.509 | 34.42 | 36.664 | 25.237 | | |
| | Wavelength showing maximum reflectance in 380 to 780 nm (nm) | 514 | 380 | 380 | 380 | 380 | 380 | 380 | | |
| | Average reflectance in wavelength region of 380 to 780 nm (%) | 69.654 | 31.447 | 27.491 | 27.404 | 26.647 | 30.295 | 21.675 | | |
| | Average reflectance in wavelength region of 780 to 1100 nm (%) | 55.029 | 26.459 | 22.681 | 22.551 | 20.754 | 24.988 | 18.741 | | |
| | Average reflectance in 380 to 780 nm (%) - Average nm reflectance in 780 to 1100 (%) | 14.625 | 4.988 | 4.809 | 4.853 | 5.893 | 5.308 | 2.935 | | |

The present invention can be implemented by involving various modifications or replacements without being bound by the above-described embodiments and Examples. It should be also understood that the configurations or materials recited in the embodiments and Examples all are a preferable example, and the present invention can be implemented by appropriately modifying these.

## Claims

1. An antimony-doped tin oxide comprising tin oxide and antimony oxide, the antimony-doped tin oxide satisfying following requirements (a) and/or (b):
(a) the half-width value (Δ2θ) of a peak around 2θ=27° as determined by X-ray diffraction measurement is 0.35 or less; and/or
(b) the content of said antimony oxide is from 0.5 to 10.0 wt% based on the weight of said antimony-doped tin oxide, and the degree of crystallinity, which is a value obtained by dividing the peak value of a peak around 2θ=27° as determined by X-ray diffraction measurement by the half-width value (Δ2θ), is 18,092 or more.

2. The antimony-doped tin oxide according to claim 1, wherein in (a), said half-width value (Δ2θ) is 0.21 or less.

3. The antimony-doped tin oxide according to claim 1, wherein in (b), the content of said antimony oxide is from 2.8 to 9.3 wt% based on the weight of said antimony-doped tin oxide.

4. The antimony-doped tin oxide according to claim 1, wherein said degree of crystallinity is 58,427 or more.

5. The antimony-doped tin oxide according to claim 1, wherein said degree of crystallinity is 78,020 or more.

6. The antimony-doped tin oxide according to claim 1, wherein when a coating film having a thickness of 70 µm and a solid content weight ratio of said antimony-doped tin oxide of 11.6 wt% is formed by dispersing said antimony-doped tin oxide in varnish containing an acrylic polymer and silicone and then coating and drying the dispersion on a substrate, and the solar reflectance of said coating film is measured in conformity with JIS K5602, the value obtained by subtracting the average reflectance in the wavelength region of 780 to 1,100 nm from the average reflectance in the wavelength region of 380 to 780 nm is 3.00% or more.

7. An infrared-absorbing pigment consisting of the antimony-doped tin oxide according to any one of claims 1 to 6.

8. An infrared-absorbing ink containing the infrared-absorbing pigment according to claim 7.

9. A printed matter having a print part printed with the infrared-absorbing ink according to claim 8.

10. The printed matter according to claim 9, wherein when the solid content weight ratio of the antimony-doped tin oxide contained in said print part is 11.6 wt%, the peak value of the reflectance in the infrared wavelength region of 780 to 1,100 nm is 28.776% or less.

11. A method for producing an antimony-doped tin oxide, comprising an aerated firing step of firing an antimony-doped tin oxide feedstock under aeration.

12. The method according to claim 11, comprising, after said aerated firing step,
a cooling step of cooling said antimony-doped tin oxide at a cooling rate of 200 °C/hour or more.

13. The method according to claim 11 or 12, comprising, before said aerated firing step,
a mixing step of mixing a tin compound and an antimony compound to obtain a mixture, and
a closed firing step of firing said mixture in a closed system to obtain said antimony-doped tin oxide feedstock.

14. The method according to claim 13, comprising, between said closed firing step and said aerated firing step,
a closed cooling step of cooling said antimony-doped tin oxide feedstock in a closed system.
